Europäisches Patentamt

European Patent Office

Office européen des brevets

(11) Veröffentlichungsnummer: **0 080 088**
A1

# (12) EUROPÄISCHE PATENTANMELDUNG

(21) Anmeldenummer: **82110145.8**

(22) Anmeldetag: **04.11.82**

(51) Int. Cl.³: **E 04 F 19/06**, E 04 F 13/00

(30) Priorität: **21.11.81 DE 3146188**

(43) Veröffentlichungstag der Anmeldung: **01.06.83**
**Patentblatt 83/22**

(84) Benannte Vertragsstaaten: **AT BE CH FR GB IT LI LU NL SE**

(71) Anmelder: **Werner Flosbach GmbH & Co. KG, -, D-5272 Wipperfürth-Neeskotten 5 (DE)**

(72) Erfinder: **Hörter, Michael, Jägerhof 3, D-5272 Wipperfürth (DE)**

(74) Vertreter: **Klein, Rolf, Dipl.-Ing., Stossdorfer Strasse 34, D-5202 Hennef 1 (DE)**

(54) **Vorrichtung zur Befestigung einer Dämmstoffschicht an einer Wand.**

(57) Zur Befestigung von Dämmstoffschichten (13) an einer Wand (10) werden an der Wand (10) Traglatten (11) angebracht. Auf die Tragelatte (11) wird eine Vorrichtung (14) aufgedrückt, die einen die Tragelatte (11) passend umgreifenden Kanal (15) aufweist. In dem Kanal (15) befinden sich erste Dorne (17), die in die Tragelatte (11) eindringen und an seitlich abstehenden Bereichen (16) der Vorrichtung (14) befinden sich zweite Dorne (18), die in die Dämmstoffschichten (13) eindringen, um diese abzustützen und festzuhalten.

**Dipl.Ing. Rolf Klein**
Patentanwalt
5202 Hennef-Sieg
Stoßdorferstraße 34
Telefon 02242/3476

0080088

Anmelder:

Werner Flosbach GmbH & Co.KG
5272 Wipperfürth-Neeskotten 5

Vorrichtung zur Befestigung einer Dämmstoffschicht
an einer Wand

Die Erfindung betrifft eine Vorrichtung zur Befestigung einer Dämmstoffschicht an einer Wand
mittels Tragelatten, wobei die Außenseite der
Dämmstoffschicht zur Erzeugung eines Belüftungsraumes hinter den Außenseiten der Tragelatten zurückliegt.

Bei der Herstellung einer Fassade wird auf die
Wand des Gebäudes, an dem die Fassade angebracht
werden soll, eine Dämmstoffschicht befestigt, die
in der Regel aus vorgefertigten Dämmstoffplatten
oder -bahnen besteht. Die Außenhaut der Fassade wird
im Abstand von der Dämmstoffschicht angeordnet,
damit zwischen der Dämmstoffschicht und der Außenhaut ein Belüftungsraum entsteht. Dieser Belüftungsraum dient insbesondere der Abführung von Kondenswasser. Besonders arbeitsintensiv ist die Befestigung der Dämmstoffschicht an der Wand des

0080088

Gebäudes. Es ist bekannt, die Dämmstoffschicht an der Wand anzukleben oder sie mit Dübeln zu befestigen. Bei der Dübelbefestigung werden durch die Dämmstoffschicht Löcher in die Wand gebohrt. Durch diese Löcher werden Spreizdübel hindurchgesteckt, die an ihrem rückwärtigen Ende einen Teller tragen, welcher sich gegen die Außenseite der Dämmstoffschicht legt. Das Setzen der Dübel kann große Schwierigkeiten bereiten, wenn die Wand von schlechter Beschaffenheit ist, wie es insbesondere bei Altbauten der Fall sein kann. Außerdem ist es zeitraubend, die Löcher zu bohren und die Dübel durch die Löcher der nachgiebigen Dämmstoffschicht in die Wand einzusetzen. Nach der Befestigung der Dämmstoffschicht auf der Wand wird die Außenhaut der Fassade an Tragelatten bzw. Konterlatten montiert, die zuvor an der Wand befestigt worden sind. Diese Tragelatten können entweder direkt an der Wand anliegen oder nach dem Anbringen der Dämmstoffschicht montiert werden, wobei sie über Abstandsdübel in einem der Stärke der Dämmstoffschicht entsprechenden Abstand von der Wand gehalten werden.

Der Erfindung liegt die Aufgabe zugrunde, eine Vorrichtung der eingangs genannten Art zu schaffen, mit der der Arbeitsaufwand zum Befestigen der Dämmstoffschicht an der Wand gegenüber den bekannten Vorrichtungen und Verfahren erheblich reduziert wird.

Zur Lösung dieser Aufgabe ist erfindungsgemäß vorgesehen, daß ein zu einem U-förmigen Kanal gebogenes Blech mindestens einen von einem Schenkel seitlich abstehenden Bereich aufweist und in dem Kanal mit ersten Dornen zum Eintreiben in die Tragelatte und in dem abstehenden Bereich mit zweiten Dornen zum Eintreiben in die Dämmstoffschicht versehen ist.

Die erfindungsgemäße Vorrichtung wird mit den ersten Dornen an der Tragelatte befestigt, wobei gleichzeitig die zweiten Dorne in die Dämmstoffschicht eindringen. Auf diese Weise wird die Dämmstoffschicht nicht in der üblichen Weise direkt an der Wand befestigt, sondern an den Tragelatten, die ohnehin an der Wand angebracht werden müssen. Dadurch, daß der seitlich abstehende Bereich gegenüber dem Boden des Kanals, der sich gegen die Außenseite der Tragelatte legt, in Richtung auf die Wand vorspringt, ist sichergestellt, daß die Außenseite der Tragelatte gegenüber der Außenseite der Dämmstoffschicht vorsteht, so daß nach dem Befestigen der Außenhaut der Fassade an der Tragelatte der für die Fassadenbelüftung erforderliche Raum entsteht.

Die Befestigung des Blechs an der Tragelatte kann mit wenigen Handgriffen erfolgen. Zu diesem Zweck ist es lediglich erforderlich, die in dem Kanal des Blechs angeordneten Dorne in die Tragelatte einzudrücken und ggf. durch Hammerschläge festzuschlagen. Zugleich mit der Befestigung des Blechs an der Tragelatte dringen die zweiten Dorne in die Dämmstoffschicht ein, um diese festzuhalten. Da die Dämmstoffschicht in der Regel viel weicher ist als das Holz der Tragelatte, ist es zweckmäßig, die zweiten Dorne, die in die Dämmstoffschicht eindringen, größer und länger zu machen als die ersten Dorne, die in das Holz der Tragelatte eindringen.

Ein besonderer Vorteil besteht darin, daß durch den rechteckigen Kanal einerseits dafür gesorgt wird, daß die Außenseite der Dämmstoffschicht den richtigen Abstand von der Außenseite der Tragelatte hat und andererseits daß das Blech stets in der richtigen

- 4 -

Ausrichtung in Bezug auf die Tragelatte montiert wird, weil die Tragelatte als Führung für den Kanal wirkt.

Gemäß einer bevorzugten Ausführungsform der Erfindung weist das Blech an jedem Schenkel des Kanals einen seitlich abstehenden Bereich auf. Hierdurch werden die zu beiden Seiten einer Tragelatte angeordneten Dämmstoffschichten mit einem einzigen Blech fixiert. In einigen Fällen kann es jedoch zweckmäßig sein, ein Blech mit nur einem einzigen abstehenden Bereich zu verwenden, beispielsweise an den Enden einer Fassade.

Die Dorne bestehen vorzugsweise aus Zungen, die aus dem Blech unter Erzeugung von Löchern abgebogen sind. Dies hat den Vorteil, daß die Vorrichtung insgesamt einstückig hergestellt werden kann, wobei die Dorne durch partielle Ausstanzung und Umbiegung der Zungen entstehen. Die Zungen können dreieckige Gestalt haben, wobei die Spitzen jeweils in Richtung auf die Wand abstehen. Dies gilt insbesondere für die ersten Dorne, die in das relativ widerstandsfähige Holz der Tragelatte eingedrückt werden.

Gemäß einer bevorzugten Ausführungsform der Erfindung verlaufen die Flächen der Zungen in den abstehenden Bereichen quer zur Richtung des Kanals. Diese Ausführungsform wird vornehmlich bei senkrecht verlaufenden Tragelatten benutzt. In diesem Fall verlaufen die Flächen der in die Dämmstoffschicht eindringenden Zungen horizontal, so daß die Zungen das Gewicht des über ihnen liegenden Teils der Dämmstoffschicht mittragen können.

Die Flächen der Zungen in dem Kanal verlaufen vorzugsweise parallel zur Richtung des Kanals. Da der Kanal auf die Tragelatte aufgesetzt wird und die Holzmaserung der Tragelatte in der Regel in Längsrichtung verläuft, schneiden die Flächen der Zungen in Richtung der Holzmaserung in die Tragelatte ein. Hierdurch wird die Befestigung des Blechs an der Tragelatte erleichtert.

Der Kanal hat vorzugsweise eine Tiefe zwischen etwa 2 mm und maximal 4 cm und eine Breite von etwa 4 bis 10 cm. Um sicherzustellen, daß die Dämmstoffschicht hinreichend großflächig gegen die Wand gedrückt wird, haben die abstehenden Bereiche des Bleches jeweils eine größere Breite als der Kanal.

Im Folgenden werden unter Bezugnahme auf die Zeichnungen Ausführungsbeispiele der Erfindung näher erläutert.

Es zeigen:

Fig. 1    einen horizontalen Schnitt durch eine Fassade mit der erfindungsgemäßen Vorrichtung,

Fig. 2    eine Draufsicht auf die Vorrichtung nach Fig. 1 vor der Montage der Außenhaut,

Fig. 3    eine perspektivische Darstellung des Bleches,

Fig. 4  einen Horizontalschnitt durch eine zweite
Ausführungsform einer Fassade, und

Fig. 5  einen Vertikalschnitt durch eine Fassade mit
horizontalen Tragelatten.

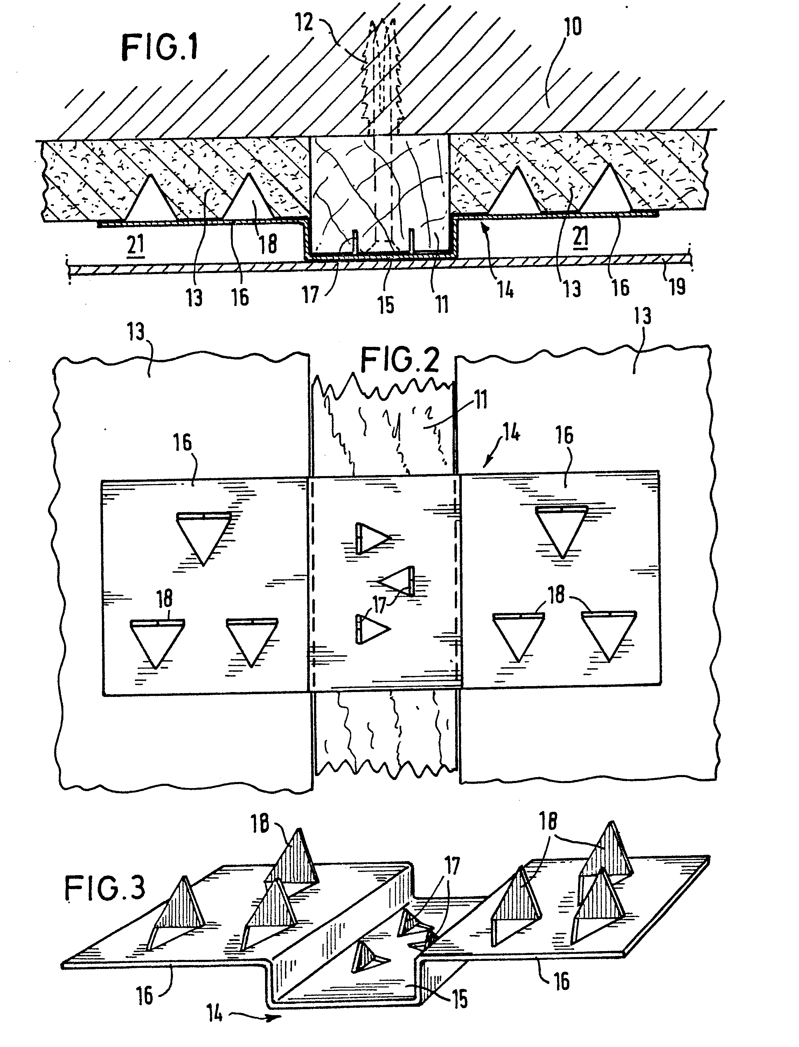

Bei der Fassade nach den Fig. 1 und 2 sind an der Wand 10 eines Gebäudes, z.B. an einem Mauerwerk, vertikale Tragelatten 11 aus Holz befestigt, von denen in den Fig. 1 und 2 nur eine dargestellt ist. Die Befestigung der Tragelatten 11 an der Wand 10 erfolgt mit Hilfe von Dübeln 12, die in vorgebohrte Löcher der Wand 10 eingesetzt sind und deren Schrauben oder Stifte durch Löcher der Tragelatte 11 hindurchgehen.

Zwischen den Tragelatten 11 sind Dämmstoffschichten 13 gegen die Wand 10 gesetzt. Diese Dämmstoffschichten 13 haben eine geringere Stärke als die Tragelatte 11, so daß die Außenseite der Tragelatte 11 über die Außenseiten der Dämmstoffschichten 13 vorsteht.

Die Befestigung der Dämmstoffschichten 13 erfolgt durch die Vorrichtung 14, die in Fig. 3 detailliert dargestellt ist. Die Vorrichtung 14 besteht aus einem einstückigen Blech aus Metall, das zu einem U-förmigen Kanal 15 mit rechteckigem Querschnitt gebogen ist. Von den Enden der Schenkel des U-förmigen Kanals 15 stehen nach entgegengesetzten Richtungen die Bereiche 16 ab, deren Breite größer ist als diejenige des Kanals 15.

Von dem Boden des Kanals 15 stehen die ersten Dorne 17 senkrecht in das Innere des Kanals ab. Diese Dorne 17 bestehen aus Zungen, die aus dem Material des Bleches ausgestanzt und rechtwinklig abgebogen sind. Die Flächen dieser Zungen verlaufen in Längsrichtung des Kanals. Die Zungen 17 sind dreieckig und haben abstehende Spitzen. Die durch die Zungen 17 hervorgerufenen Löcher in der Bodenwand des Kanals 15 sind natürlich ebenfalls dreieckig.

Die seitlich abstehenden Bereiche 16 des Bleches weisen zweite Zungen 18 auf, die ebenfalls aus rechtwinklig abgebogenen ausgestanzten Zungen mit nach außen weisenden Spitzen bestehen. Die zweiten Zungen 18 haben jeweils eine größere Fläche als die ersten Zungen 17 und sie sind quer zur Längsrichtung des Kanals 15 ausgerichtet.

Die Vorrichtung 14 wird gemäß Fig. 1 mit ihrem Kanal 15 an die Tragelatte 11 angesetzt. Da die Breite des Kanals 15 etwa der Breite der Tragelatte 11 entspricht, legt sich die Bodenwand des Kanals 15 gegen die Außenseite der Tragelatte 11, während die ersten Dorne 17 in die Tragelatte 11 und die zweiten Dorne 18 in die Dämmstoffschichten 13 eindringen. Wie aus Fig. 1 zu erkennen ist, sind die ersten Dorne 17 in Längsrichtung der Tragelatte, also in Richtung der Holzmaserung, ausgerichtet, während die zweiten Dorne 18 rechtwinklig dazu ausgerichtet sind und dazu beitragen, das Gewicht der Dämmstoffschichten 13 abzustützen.

Das Blech der Vorrichtung 14 hat je nach Material eine Stärke von etwa 0,5 und 1 mm. Es ist daher auch möglich, einen Nagel durch dieses Blech hindurch in die Tragelatte 11 einzuschlagen.

Nachdem die Dämmstoffschichten 13 mit Hilfe der Vorrichtungen 14 befestigt sind, wird die Außenhaut 19 an den Tragelatten 11 angebracht. Bei der Außenhaut 19 kann es sich auch um eine Schalung aus Holzbrettern handeln, auf der die eigentlichen Fassadenelemente, z.B. Schieferplatten, angebracht werden. Die Außenhaut 19, die an den Bodenwänden der Kanäle 15 der Vorrichtungen 14 anliegt, wird an der Tragelatte 11 angenagelt, wobei die Nägel auch durch das Blech der Vorrichtung 15 hindurchgetrieben werden können.

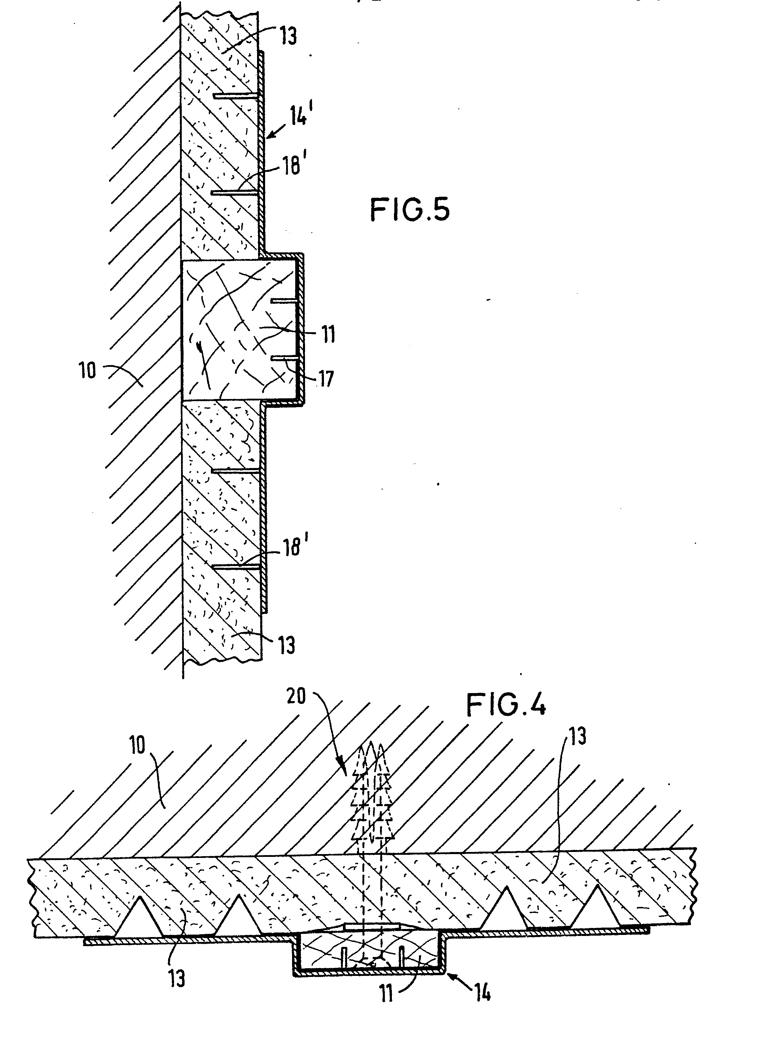

Fig. 5 zeigt die Befestigung von Dämmstoffschichten 13 an einer Wand 10 zwischen horizontalen Tragelatten 10. Hierbei wird eine Vorrichtung 14' benutzt, die prinzipiell in gleicher Weise ausgebildet ist wie die Vorrichtung 14 aus Fig. 3, jedoch mit dem Unterschied, daß die zweiten Dorne 18' parallel zu den ersten Dornen 17' verlaufen - also parallel zur Längsrichtung des Kanals 15. Hierdurch wird erreicht, daß auch bei dem Ausführungsbeispiel der Fig. 5 die zweiten Dorne 18' einen Teil des Gewichts der Dämmstoffschichten 13 aufnehmen.

Bei dem Ausführungsbeispiel der Fig. 4 liegt die Tragelatte 11 nicht direkt an der Wand 10 an, sondern sie wird von einem Abstandsdübel 20, der in die Wand 10 eingesetzt ist, im Abstand von der Wand 10 gehalten. Zwischen die Tragelatte 11 und die Wand 10 werden die Dämmstoffschichten 13 eingeschoben. Zur Befestigung der Dämmstoffschichten an der Tragelatte 11 ist eine Vorrichtung 14 vorgesehen, die gemäß Fig. 3 ausgebildet ist.

Durch die erfindungsgemäße Vorrichtung werden bei allen Ausführungsbeispielen die Dämmstoffschichten 13 an der Tragelatte befestigt, die ihrerseits an der Wand montiert ist. Dabei stehen die Außenseiten der Tragelatten über die Außenseiten der Dämmstoffschichten vor, so daß zwischen den Dämmstoffschichten 13 und der Außenhaut 19 bzw. Schalung Belüftungsräume 21 (Fig. 1) freibleiben.

A n s p r ü c h e

1. Vorrichtung zur Befestigung einer Dämmstoffschicht an einer Wand mittels Tragelatten, wobei die Außenseite der Dämmstoffschicht zur Erzeugung eines Belüftungsraumes hinter den Außenseiten der Tragelatten zurückliegt, d a d u r c h  g e k e n n z e i c h n e t , daß ein zu einem U-förmigen Kanal (15) gebogenes Blech mindestens einen von einem Schenkel seitlich abstehenden Bereich (16) aufweist und in dem Kanal (15) mit ersten Dornen (17) zum Eintreiben in die Tragelatte (11) und in dem abstehenden Bereich (16) mit zweiten Dornen (18) zum Eintreiben in die Dämmstoffschicht (13) versehen ist.

2. Vorrichtung nach Anspruch 1, dadurch gekennzeichnet, daß das Blech an jedem Schenkel des Kanals (15) einen seitlich abstehenden Bereich (16) aufweist.

3. Vorrichtung nach Anspruch 1 und 2, dadurch gekennzeichnet, daß die Dorne (17,18) aus Zungen bestehen, die aus dem Blech unter Erzeugung von Löchern abgebogen sind.

4. Vorrichtung nach Anspruch 3, dadurch gekennzeichnet, daß die Zungen dreieckige Gestalt haben.

5. Vorrichtung nach Anspruch 3 oder 4, dadurch gekennzeichnet, daß die Flächen der Zungen in den abstehenden Bereichen (16) quer zur Richtung des Kanals (15) verlaufen.

6. Vorrichtung nach Anspruch 3 oder 4, dadurch gekennzeichnet, daß die Flächen der Zungen in dem Kanal (15) parallel zur Richtung des Kanals (15) verlaufen.

7. Vorrichtung nach einem der Ansprüche 1 bis 6, dadurch gekennzeichnet, daß der Kanal (15) eine Tiefe zwischen etwa 2 mm und maximal 4 cm hat.

8. Vorrichtung nach einem der vorhergehenden Ansprüche, dadurch gekennzeichnet, daß der Kanal (15) eine Breite von etwa 4 bis 10 cm hat.

9. Vorrichtung nach einem der vorhergehenden Ansprüche, dadurch gekennzeichnet, daß die abstehenden Bereiche (16) jeweils eine größere Breite haben als der Kanal (15).

**FIG.1**

**FIG.2**

**FIG.3**

FIG.5

FIG.4

Europäisches
Patentamt

**EUROPÄISCHER RECHERCHENBERICHT**

0080088

Nummer der Anmeldung

EP 82 11 0145

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | --- | | E 04 F 19/06 |
| P,A | DE-U-8 130 976 (E. GEISER) * Figur; Seite 3, Absatz 2 * | 1,2,7 | E 04 F 13/00 |
| | --- | | |
| A | DE-A-3 015 255 (GRÜNZWEIG UND HARTMANN MONTAGE GMBH) * Figuren 1, 4; Seite 7, Zeilen 12-18 * | 1 | |
| | --- | | |
| A | US-A-3 313 072 (D.E. CUE) * Figur 3 * | 1 | |
| | --- | | |
| A | DE-A-1 683 247 (K. MEIER) * Figuren 1-3; Seite 5, Absatz 5 * | 3,4 | |
| | --- | | |
| A | DE-A-1 784 477 (H.-J. LEISTEN) * Figuren 1, 2 * | 3,4 | RECHERCHIERTE SACHGEBIETE (Int. Cl. 3) |
| | ----- | | E 04 F 13/00 E 04 F 19/00 |

Der vorliegende Recherchenbericht wurde für alle Patentansprüche erstellt.

| Recherchenort BERLIN | Abschlußdatum der Recherche 13-01-1983 | Prüfer KRABEL A.W.G. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82